# EUROPÄISCHE PATENTSCHRIFT

(11) **EP 2 352 937 B1**
(45) Veröffentlichungstag und Bekanntmachung des Hinweises auf die Patenterteilung: **17.10.2012**
(21) Anmeldenummer: 09804236.9
(22) Anmeldetag: 02.12.2009
(51) Int. Cl.: F16J 15/32

(54) **BÜRSTENDICHTUNG**
BRUSH SEAL
JOINT BROSSE

(30) Priorität: 03.12.2008 DE 102008060371
(43) Veröffentlichungstag der Anmeldung: 10.08.2011
(73) Patentinhaber: MTU Aero Engines GmbH, 80995 München (DE)
(72) Erfinder: BEICHL, Stefan, 82211 Herrsching (DE)
(86) Internationale Anmeldenummer: PCT/DE2009/001697
(87) Internationale Veröffentlichungsnummer: WO 2010/063269

(56) Entgegenhaltungen:
- EP-A1- 1 892 442
- CH-A- 450 353
- US-A- 2 878 048
- US-A1- 2003 102 629

## Beschreibung

Die Erfindung betrifft eine Bürstendichtung nach dem Oberbegriff des Anspruchs 1.

Gasturbinen bestehen aus mehreren Baugruppen, so z.B. aus mindestens einem Verdichter, mindestens einer Brennkammer sowie mindestens einer Turbine. Der oder jede Verdichter sowie die oder jede Turbine verfügen über einen Rotor, der gegenüber einem feststehenden Stator rotiert. Bei dem Stator handelt es sich insbesondere um ein feststehendes Gehäuse, dem feststehende Leitschaufeln zugeordnet sind. Dem Rotor sind Laufschaufeln zugeordnet, die sich zusammen mit dem Rotor gegenüber den feststehenden Leitschaufeln sowie dem feststehenden Gehäuse drehen.

Zur Optimierung des Wirkungsgrads von Gasturbinen ist es erforderlich, Leckageströmungen zu minimieren. Dies gilt einerseits für Leckageströmungen zwischen relativ zueinander rotierenden Bauteilen und anderseits für Leckageströmungen zwischen feststehenden Bauteilen. Dichtungsanordnungen zur Abdichtung eines Spalts zwischen relativ zueinander rotierenden Bauteilen bezeichnet man auch als dynamische Dichtungsanordnungen. Dichtungsanordnungen zur Abdichtung eines Spalts zwischen feststehenden Bauteilen bezeichnet man auch als statische Dichtungsanordnungen.

Zur Abdichtung sogenannter Ringspalte zwischen relativ zueinander rotierenden Baugruppen, nämlich zwischen einem Rotor und einem Stator, haben sich Bürstendichtungen bewährt.

Aus der EP 1 203 178 B 1 ist eine Dichtungsanordnung bekannt, bei welcher in einem von einem Gehäuse definierten Aufnahmeraum eine Bürstendichtung positioniert ist. Die Bürstendichtung umfasst ein Borstenpaket aus mehreren Borsten, die mit Hilfe eines Fixierelements an einem Borstenträger fixiert sind, wobei die Borsten des Borstenpakets mit Enden aus dem vom Gehäuse definierten Aufnahmeraum herausragen und am Rotor anliegen. Das Gehäuse, welches den Aufnahmeraum für die Borstendichtung bildet, umfasst ein Stützelement und ein Deckelement. Nach der EP 1 203 178 B1 sind die Borsten des Borstenpakets der Bürstendichtung als Kunststofffasern ausgebildet, so z. B. als Aramidfasern bzw. Kevlarfasern. US 2003/0102629 A1 offenbart eine Bürstendichtung, deren Borsten aus unterchiedlichen Fasern, wie Polymerfasern, Kohlenstoffasern, keramischen Fasern und Aramidfasern bestehen können.

Hiervon ausgehend liegt der vorliegenden Erfindung das Problem zu Grunde, eine neuartige Bürstendichtung zu schaffen. Dieses Problem wird durch eine Bürstendichtung gemäß Anspruch 1 gelöst.

Erfindungsgemäß umfasst das Borstenpaket mehrere Lagen aus Borsten, die aus unterschiedlichen Werkstoffen gefertigt sind.

Mit der hier vorliegenden Erfindung wird eine Bürstendichtung vorgeschlagen, deren Borstenpaket aus unterschiedlichen Werkstoffen hergestellte Borsten umfasst. So umfasst das Borstenpaket der erfindungsgemäßen Bürstendichtung mehrere Lagen aus Borsten, die aus unterschiedlichen Werkstoffen gefertigt sind. Hiermit können Bürstendichtungen geschaffen werden, die einerseits eine gute Dichtwirkung aufweisen und andererseits durch eine hohe mechanische Widerstandsfähigkeit sowie eine hohe Temperaturbeständigkeit gekennzeichnet sind.

Das Borstenpaket der erfindungsgemäßen Bürstendichtung umfasst eine Innenlage, deren Borsten als Kohlefasern ausgebildet sind. Vorzugsweise umfasst das Borstenpaket eine Außenlage, deren Borsten als Aramidfasern oder als Drahtfaser aus Haynes 25-Draht ausgebildet sind. Eine solche Bürstendichtung mit einem Borstenpaket in Hybridbauweise zeichnet sich durch eine besonders vorteilhafte Temperaturbeständigkeit sowie mechanische Widerstandsfähigkeit und damit Lebensdauer sowie durch eine besonders vorteilhafte Dichtwirkung aus.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine erfindungsgemäße Bürstendichtung nach einem ersten Ausfithrungsbeispiel der Erfindung;
- Fig. 2: eine erfindungsgemäße Bürstendichtung nach einem zweiten Ausführungsbeispiel der Erfindung;
- Fig. 3: eine erfindungsgemäße Bürstendichtung nach einem dritten Ausführungsbeispiel der Erfindung; und
- Fig. 4: eine erfindungsgemäße Bürstendichtung nach einem vierten Ausführungsbeispiel der Erfindung.

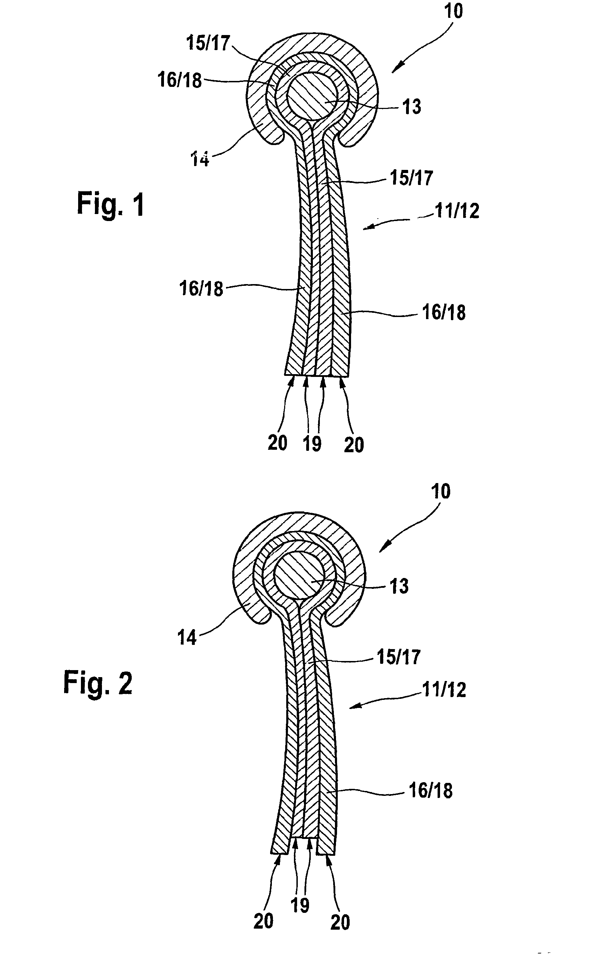

Fig. 1 zeigt eine schematische Darstellung einer erfindungsgemäßen Bürstendichtung 10 nach einem ersten Ausführungsbeispiel der hier vorliegenden Erfindung, wobei die Bürstendichtung 10 der Fig. 1 ein Borstenpaket 11 aus mehreren Borsten 12 umfasst und wobei die Borsten 12 des Borstenpakets 11 an einem drahtartigen Borstenträger 13 mithilfe eines im Querschnitt C-förmigen Fixierelement 14 fixiert sind.

Im Sinne der hier vorliegenden Erfindung umfasst das Borstenpaket 11 der erfindungsgemäßen Bürstendichtung 10 mehrere Lagen aus Borsten, nämlich im gezeigten Ausführungsbeispiel zwei Lagen 15 und 16 aus Borsten 17 und 18, die derart überdeckend um den Borstenträger 13 gewickelt und an demselben fixiert sind, dass die Borsten 17 der Lage 15 eine Innenlage und die Borsten 18 der Lage 16 eine Außenlage bilden. Die Außenlage kann auch als Decklage bezeichnet werden. Im Sinne der hier vorliegenden Erfindung unterscheiden sich die Borsten 17, 18 der Lagen 15, 16 hinsichtlich ihrer Werkstoffzusammensetzung. So sind die Borsten 17 der Innenlage 15 des Borstenpakets 11 als Kohlefasern ausgebildet. Die Borsten 18 der Außenlage 16 hingegen sind als Aramidfasern oder als Drahtfasern aus Haynes 25-Draht ausgebildet.

Die in Fig. 1 dargestellte Bürstendichtung 10 ist vorzugsweise, wie aus der EP 1 203 178 B1 bekannt, zur Ausbildung einer Dichtungsanordnung in einem Gehäuse positioniert, welches ein Deckelement und ein Stützelement umfasst, wobei freie Enden 19, 20 der Borsten 17, 18 aus dem Gehäuse herausragen und vorzugsweise an einem Rotor anliegen. Diesbezüglich sei auf die EP 1 203 178 B1 verwiesen. In Fig. 1 würde sich demnach auf der rechten Seite der dort gezeigten Bürstendichtung 10 ein Stützelement und auf der linken Seite ein Deckelement eines Gehäuses anschließen.

Im Ausführungsbeispiel der Fig. 1 sind die Borsten 17, 18 der Innenlage 15 und Außenlage 16 derart ausgebildet, dass die freien Enden 19 bzw. 20 derselben einen gleichen Innendurchmesser definieren. In Fig. 1 würden demnach sowohl die freien Enden 19 der Borsten 17 der Innenlage 15 als auch die freien Enden 20 der Borsten 18 der Außenlage 16 an einem Rotor anliegen.

Demgegenüber zeigt Fig. 2 ein Ausführungsbeispiel einer erfindungsgemäßen Bürstendichtung 10, bei welcher die freien Enden 19 der Borsten 17 der Innenlage 15 einen größeren Innendurchmesser definieren als die freien Enden 20 der Borsten 18 der Außenlage 16. In Fig. 2 stehen demnach die Borsten 18 der Außenlage 16 am Innendurchmesser gegenüber den Borsten 17 der Innenlage 15 vor.

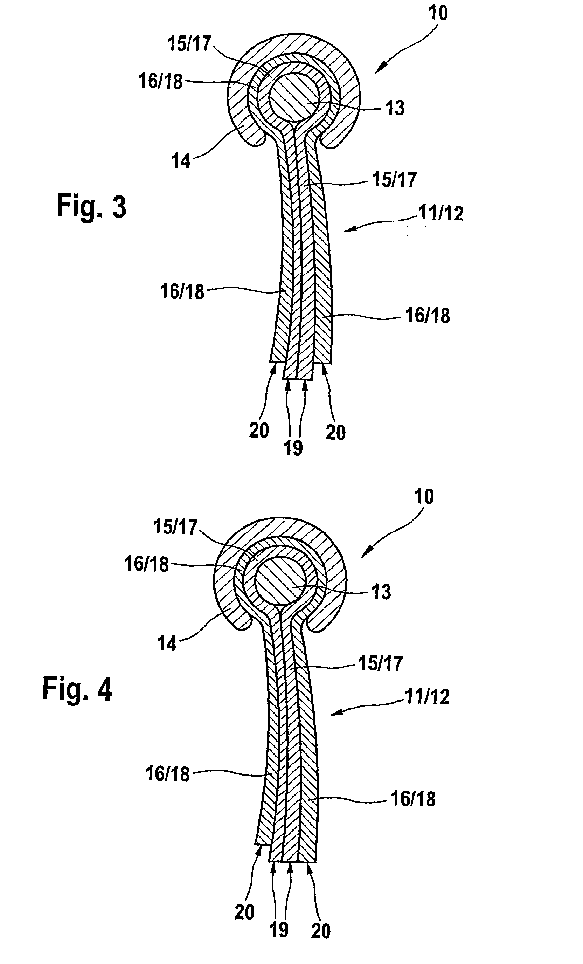

Im Unterschied hierzu ist es auch möglich, wie im Ausführungsbeispiel der Fig. 3 gezeigt ist, dass die freien Enden 20 der Borsten 18 der Außenlage 16 einen größeren Innendurchmesser definieren als die freien Enden 19 der Borsten 17 der Innenlage 15, wobei dann in dem Ausführungsbeispiel der Fig. 3 die Borsten 15 der Innenlage 17 am Innendurchmesser gegenüber den Borsten 18 der Außenlage 16 überstehen.

In den Ausführungsbeispielen der Fig. 1, 2 und 3 sind die freien Enden 20 der Borsten 18 der Außenlage 16 jeweils derart ausgebildet, dass dieselben stützelementseitig und deckelementseitig gleich lang sind, also stützelementseitig und deckelementseitig gleiche Innendurchmesser definieren. Im Unterschied hierzu ist es, wie Fig. 4 entnommen werden kann, auch möglich, dass die Borsten 18 der Außenlage 16 im Bereich ihrer freien Enden 20 stützelementseitig und deckelementseitig unterschiedliche Innendurchmesser definieren, wobei in Fig. 4 der stützelementseitige Innendurchmesser der Enden 20 kleiner ist als der deckelementseitige Durchmesser derselben. Es ist jedoch auch möglich, dass die Borsten 18 der Außenlage 16 mit ihren freien Enden stützelementseitig einen größeren Innendurchmesser definieren als deckelementseitig.

Allen gezeigten Ausführungsbeispielen der Fig. 1 bis 4 ist gemeinsam, dass die Borsten 17 der Innenlage 15 des Borstenpakets 11 als Kohlefasern und die Borsten 18 der Außenlage 16 bzw. Decklage des Borstenpakets 11 als Aramidfasern oder Drahtfasern aus Haynes 25-Draht ausgebildet sind. Es liegt demnach im Sinne der Erfindung ein Borstenpaket in zumindest Hybridbauweise bereitzustellen, wobei die Borsten einer Innenlage aus Kohlefasern und die Borsten der Außenlage, aus einem anderen Werkstoff gebildet sind.

Die erfindungsgemäße Bürstendichtung zeichnet sich durch eine hohe Temperaturbeständigkeit und hohe mechanische Widerstandsfähigkeit aus. Ferner neigt dieselbe nur zu einer geringen Wärmeentwicklung beim Anstreifen an einen Rotor. Es kann eine gute Dichtwirkung bei langer Lebensdauer realisiert werden.

## Patentansprüche

1. Bürstendichtung zur Abdichtung eines Spalts zwischen zwei Bauteilen, insbesondere zwischen einem Rotor und einem Stator, mit einem Borsten umfassenden Borstenpaket, wobei die Borsten des Borstenpakets an einem Borstenträger befestigt sind,
**dadurch gekennzeichnet,**
**dass** das Borstenpaket (11) mehrere Lagen (15, 16) aus Borsten (17, 18) umfasst, die aus unterschiedlichen Werkstoffen gefertigt sind, wobei das Borstenpaket (11) eine Innenlage (15) umfasst, deren Borsten (17) als Kohlefasern ausgebildet sind.

2. Bürstendichtung nach Anspruch 1,
**dadurch gekennzeichnet,**
**dass** das Borstenpaket (11) eine Außenlage (16) umfasst, deren Borsten (18) als Aramidfasern ausgebildet sind.

3. Bürstendichtung nach Anspruch 1,
**dadurch gekennzeichnet,**
**dass** das Borstenpaket (11) eine Außenlage (16) umfasst, deren Borsten (18) als Drahtfasern aus Haynes 25 Draht ausgebildet sind.

4. Bürstendichtung nach einem der Ansprüche 1 bis 3,
**dadurch gekennzeichnet,**
**dass** die Borsten (17, 18) der mehreren Lagen (15, 16) derart ausgebildet sind, dass freie Enden derselben gleiche Innendurchmesser definieren.

5. Bürstendichtung nach einem der Ansprüche 1 bis 3,
**dadurch gekennzeichnet,**
**dass** die Borsten (17, 18) der mehreren Lagen (15, 16) derart ausgebildet sind, dass freie Enden derselben unterschiedliche Innendurchmesser definieren.

6. Bürstendichtung nach Anspruch 5,
**dadurch gekennzeichnet,**
**dass** freie Enden der Borsten der Außenlage (16) einen kleineren Innendurchmesser definieren als freie Enden der Borsten der Innenlage (15).

7. Bürstendichtung nach Anspruch 5,
**dadurch gekennzeichnet,**
**dass** freie Enden der Borsten der Außenlage (16) einen größeren Innendurchmesser definieren als freie Enden der Borsten der Innenlage (15).

8. Bürstendichtung nach einem der Ansprüche 1 bis 7,
**dadurch gekennzeichnet,**
**dass** die Borsten (18) der Außenlage (16) derart ausgebildet sind, dass freie Enden derselben stützelementseitig und deckelementseitig gleiche Innendurchmesser definieren.

9. Bürstendichtung nach einem der Ansprüche 1 bis 7,
**dadurch gekennzeichnet,**
**dass** die Borsten (18) der Außenlage (16) derart ausgebildet sind, dass freie Enden derselben stützelementseitig und deckelementseitig unterschiedliche Innendurchmesser definieren.

10. Bürstendichtung nach einem der Ansprüche 1 bis 9,
**dadurch gekennzeichnet,**
**dass** die Borsten des Borstenpakets über ein Fixierelement an einem Borstenträger befestigt sind oder an den Borstenträger geklebt sind.

11. Dichtungsanordnung zur Abdichtung eines Spalts zwischen zwei Bauteilen, insbesondere zwischen einem Rotor und einem Stator, mit einer Bürstendichtung, die zumindest abschnittsweise in einem Aufnahmeraum eines Gehäuses, welches von einem Stützelement und einem Deckelement bebildet ist, angeordnet ist, wobei freie Enden von Borsten der Bürstendichtung aus dem Aufnahmeraum des Gehäuses herausragen,
**dadurch gekennzeichnet,**
**dass** die Bürstendichtung nach einem oder mehreren der Ansprüche 1 bis 10 ausgebildet ist.

12. Turbomaschine mit mindestens einer Dichtungsanordnung nach Anspruch 11.

13. Gasturbine, insbesondere Flugtriebwerk, mit mindestens einer Dichtungsanordnung nach Anspruch 11.

14. Dampfturbine mit mindestens einer Dichtungsanordnung nach Anspruch 11.

## Claims

1. A brush seal for sealing a gap between two components,
in particular between a rotor and a stator, having a bristle packet comprising bristles, wherein the bristles of the bristle packet are secured to a bristle carrier,
**characterised in that**
the bristle packet (11) comprises a plurality of layers (15, 16) of bristles (17, 18) that are made from different materials, wherein the bristle packet (11) comprises an inner layer (15) whose bristles (17) are formed as carbon fibres.

2. A brush seal according to claim 1,
**characterised in that**
the bristle packet (11) comprises an outer layer (16) whose bristles (18) are formed as aramide fibres.

3. A brush seal according to claim 1,
**characterised in that**
the bristle packet (11) comprises an outer layer (16) whose bristles (18) are formed as wire fibres of Haynes 25 wire.

4. A brush seal according to one of claims 1 to 3,
**characterised in that**
the bristles (17, 18) of the plurality of layers (15, 16) are formed in such a way that free ends of the same define identical inside diameters.

5. A brush seal according to one of claims 1 to 3,
**characterised in that**
the bristles (17, 18) of the plurality of layers (15, 16) are formed in such a way that free ends of the same define different inside diameters.

6. A brush seal according to claim 5,
**characterised in that**
free ends of the bristles of the outer layer (16) define a smaller inside diameter than free ends of the bristles of the inner layer (15).

7. A brush seal according to claim 5,
**characterised in that**
free ends of the bristles of the outer layer (16) define a larger inside diameter than free ends of the bristles of the inner layer (15).

8. A brush seal according to one of claims 1 to 7,
**characterised in that**
the bristles (18) of the outer layer (16) are formed in such a way that free ends of the same define identical inside diameters on the support-element side and the cover-element side.

9. A brush seal according to one of claims 1 to 7,
**characterised in that**
the bristles (18) of the outer layer (16) are formed in such a way that free ends of the same define different inside diameters on the support-element side and the cover-element side.

10. A brush seal according to one of claims 1 to 9,
**characterised in that**
the bristles of the bristle packet are secured to a bristle carrier by way of a fixing element or are glued to the bristle carrier.

11. A sealing arrangement for sealing a gap between two components, in particular between a rotor and a stator, having a brush seal that is arranged at least in sections in a receiving space of a housing which is formed by a support element and a cover element, wherein free ends of bristles of the brush seal project out of the receiving space of the housing, **characterised in that**
the brush seal is formed according to one or more of claims 1 to 10.

12. A turbo-engine having at least one sealing arrangement according to claim 11.

13. A gas turbine, in particular an aircraft engine, having at least one sealing arrangement according to claim 11.

14. A steam turbine having at least one sealing arrangement according to claim 11.

## Revendications

1. Joint brosse destiné à rendre e étanche une fente entre deux composants, en particulier entre un rotor et un stator, avec un paquet de poils comportant des poils, sachant que les poils du paquet de poils sont fixés sur un support de poils,
**caractérisé en ce**
**que** le paquet de poils (11) comporte plusieurs couches (15, 16) de poils (17, 18) qui sont fabriqués en différents matériaux, sachant que le paquet de poils (11) comporte une couche intérieure (15), dont les poils (17) sont réalisés sous la forme de fibres de carbone.

2. Joint brosse selon la revendication 1,
**caractérisé en ce**
**que** le paquet de poils (11) comporte une couche extérieure (16), dont les poils (18) sont réalisés sous la forme de fibres d'Aramide.

3. Joint brosse selon la revendication 1,
**caractérisé en ce**
**que** le paquet de poils (11) comporte une couche extérieure (16), dont les poils (18) sont réalisés sous la forme de fibres métalliques en Haynes 25.

4. Joint brosse selon l'une quelconque des revendications 1 à 3,
**caractérisé en ce**
**que** les poils (17, 18) des plusieurs couches (15, 16) sont réalisés de telle manière que leurs extrémités libres définissent des diamètres intérieurs identiques.

5. Joint brosse selon l'une quelconque des revendications 1 à 3,
**caractérisé en ce**
**que** les poils (17, 18) des plusieurs couches (15, 16) sont réalisés de telle manière que leurs extrémités libres définissent des diamètres intérieurs différents.

6. Joint brosse selon la revendication 5,
**caractérisé en ce**
**que** des extrémités libres des poils de la couche extérieure (16) définissent un plus petit diamètre intérieur que des extrémités libres des poils de la couche intérieure (15).

7. Joint brosse selon la revendication 5,
**caractérisé en ce**
**que** des extrémités libres des poils de la couche extérieure (16) définissent un plus grand diamètre intérieur que des extrémités libres des poils de la couche intérieure (15).

8. Joint brosse selon l'une quelconque des revendications 1 à 7,
**caractérisé en ce**
**que** les poils (18) de la couche extérieure (16) sont réalisés de telle manière que leurs extrémités libres définissent côté élément d'appui et côté élément de recouvrement des diamètres intérieurs identiques.

9. Joint brosse selon l'une quelconque des revendications 1 à 7,
**caractérisé en ce**
**que** les poils (18) de la couche extérieure (16) sont réalisés de telle manière que leurs extrémités libres définissent côté élément d'appui et côté élément de recouvrement des diamètres intérieurs différents.

10. Joint brosse selon l'une quelconque des revendications 1 à 9,
**caractérisé en ce que**
les poils du paquet de poils sont fixés par un élément de fixation sur un support de poils ou sont collés au support de poils.

11. Ensemble de joint destiné à rendre épanche une fente entre deux composants, en particulier entre un rotor et un stator, avec un joint brosse qui est disposé au moins par section dans un espace de réception d'un boîtier qui est constitué par un élément d'appui et un élément de recouvrement, sachant que des extrémités libres de poils du joint brosse dépassent de l'espace de réception du boîtier,
**caractérisé en ce**
**que** le joint brosse est réalisé selon l'une ou plusieurs des revendications 1 à 10.

12. Turbomachine avec au moins un ensemble de joint selon la revendication 11.

13. Turbine à gaz, en particulier groupe motopropulseur avec au moins un ensemble de joint selon la revendication 11.

14. Turbine à vapeur avec au moins un ensemble de joint selon la revendication 11.
